(19) Europäisches Patentamt
European Patent Office
Office européen des brevets

(11) EP 3 500 580 B1

(12) **EUROPÄISCHE PATENTSCHRIFT**

(45) Veröffentlichungstag und Bekanntmachung des Hinweises auf die Patenterteilung:
**30.10.2019 Patentblatt 2019/44**

(21) Anmeldenummer: **16816620.5**

(22) Anmeldetag: **09.12.2016**

(51) Int Cl.:
***C07F 7/08*** *(2006.01)*

(86) Internationale Anmeldenummer:
**PCT/EP2016/080479**

(87) Internationale Veröffentlichungsnummer:
**WO 2018/103864 (14.06.2018 Gazette 2018/24)**

(54) **VERFAHREN ZUR HERSTELLUNG VON HYDRIDOSILANEN**

METHOD FOR PRODUCING HYDRIDOSILANES

PROCÉDÉ DE PRODUCTION D'HYDRIDOSILANES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**26.06.2019 Patentblatt 2019/26**

(73) Patentinhaber: **Wacker Chemie AG**
**81737 München (DE)**

(72) Erfinder: **FRITZ-LANGHALS, Elke**
**85521 Ottobrunn (DE)**

(74) Vertreter: **Mai, Marit et al**
**Wacker Chemie AG**
**Hanns-Seidel-Platz 4**
**81737 München (DE)**

(56) Entgegenhaltungen:
**WO-A1-2007/005037**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 500 580 B1

## Beschreibung

Die Erfindung betrifft ein Verfahren zur Herstellung von Hydridosilanen durch Umwandlung von Hydridosiloxanen in Gegenwart einer kationischen Si(II)- Verbindung als Katalysator.

Hydridosilane und Hydridosiloxane spielen in der Technik eine bedeutende Rolle. Diese allgemein als Hydrosilylierung bezeichnete Addition an Vinylverbindungen wird beispielsweise zur Vernetzung von Siliconpolymeren eingesetzt und findet breite Anwendung zur Anbindung funktioneller Gruppen über einen Kohlenstoffspacer an ein Siliciumzentrum.

Hydridosilane haben technische Bedeutung insbesondere in der Elektronikindustrie erlangt. Beispielsweise wird Dimethylsilan im CVD-Prozess zur Erzeugung von dielektrischen Überzügen eingesetzt.

Ein unkompliziertes, sicheres und kostengünstiges Verfahren zur Herstellung der hochentzündlichen und hochreaktiven Hydridosilane ist daher von großer technischer Bedeutung. Insbesondere bestehen für Anwendungen der Hydridosilane in der Elektronikindustrie hohe Reinheitsanforderungen. Eine nachträgliche Aufreinigung der Hydridosilane, etwa über Destillation, verteuert den Herstellprozess aufgrund des notwendigen sicherheitstechnischen Aufwands erheblich.

In der WO 2007/005037 wird ein Verfahren beschrieben, bei dem Hydridosilane in Gegenwart von Lewissauren Borverbindungen der allgemeinen Formel $BR_3$, insbesondere der Borverbindung $B(C_6F_5)_3$ als Katalysator hergestellt werden können. Bei dieser auch als Disproportionierung bezeichneten Reaktion bilden sich Hydridosilane aus Si-H-Gruppierungen enthaltenden Siloxanen, wobei außerdem Si-H-Gruppierungen enthaltende höhermolekulare Siloxane entstehen. Von Nachteil bei diesem Verfahren ist, dass - wie in den Ausführungsbeispielen und auch in Macromolecules 2006, 39, 3802 beschrieben - als unerwünschte Nebenprodukte in erheblichem Umfang Siloxancyclen entstehen. Ein weiterer Nachteil ist, dass der Katalysator $B(C_6F_5)_3$ im Zuge der Umsetzung unter Bildung katalytisch inaktiver Verbindungen, insbesondere Dimethyl(pentafluorphenyl)silan verbraucht wird. Hierdurch besteht die Gefahr, dass die Umsetzung vorzeitig zum Stillstand kommt. Für einen hohen Umsatz müssen daher verhältnismäßig große Mengen an Katalysator eingesetzt werden, wodurch das Verfahren erheblich verteuert wird. Es besteht außerdem die Gefahr, dass die gebildeten Zersetzungsprodukte, insbesondere Dimethyl(pentafluorphenyl)silan aufgrund ihrer hohen Flüchtigkeit nicht vollständig von den gebildeten H-Silanen abgetrennt werden können, wodurch Einbußen in der Qualität der hergestellten Silane in Kauf genommen werden müssen.

Die Aufgabe der vorliegenden Erfindung besteht daher darin, ein Verfahren zur Herstellung von Hydridosilanen bereitzustellen, welches die genannten Nachteile nicht aufweist.

Gegenstand der vorliegenden Erfindung ist ein Verfahren zur Herstellung von Hydridosilanen, bei dem Si-H-Gruppierungen enthaltende Siloxane in Gegenwart einer kationischen Si(II)-Verbindung als Katalysator umgesetzt werden.

Es wurde überraschend gefunden, dass kationische Si(II)-Verbindungen die genannte Umsetzung katalysieren und trotz ihrer allgemein bekannten hohen chemischen Reaktionsfähigkeit im Gegensatz zu den Lewis-sauren Borverbindungen unter den Reaktionsbedingungen stabil sind, wodurch das Herstellverfahren deutlich vereinfacht wird.

Bei Verwendung der Lewis-sauren Borverbindung $B(C_6F_5)_3$ werden nach der Umsetzung mehrere Fluor-haltige Nebenprodukte gefunden, die nicht mehr katalytisch aktiv sind. Fluor-haltige organische Verbindungen sind jedoch toxikologisch bedenklich und daher technisch unerwünscht.

Die Gegenionen der verwendeten kationischen Si(II)- Verbindungen sind zwar häufig Fluor-haltige Boranate, wie z.B. $B(C_6F_5)_4^-$, diese sind jedoch unter den Reaktionsbedingungen stabil und zeigen keine Zersetzung unter Bildung flüchtiger Fluorverbindungen.

Ein weiterer Vorteil ist, dass bei Verwendung der kationischen Si(II)-Verbindungen wesentlich weniger Siloxancyclen gebildet werden.

Schließlich kann die Reaktivität der kationischen Si(II)-Verbindung durch die Wahl des Anions gesteuert werden, was technisch von Vorteil ist.

Neben den Hydridosilanen werden bei dem Verfahren höhermolekulare Si-H-Gruppierungen enthaltende Siloxane gebildet.

Das für das Verfahren eingesetzte Si-H-Gruppierungen enthaltende Siloxan hat bevorzugt die allgemeine Formel I

$$\mathbf{R^1R^2HSiO_{(1/2)}Z} \qquad \text{(I)},$$

wobei

**Z** die allgemeine Formel Ia

$$\mathbf{(SiO_{4/2})_a(R^xSiO_{3/2})_b(R^x{}_2SiO_{2/2})_c(R^x{}_3SiO_{1/2})_d} \qquad \textbf{(Ia)}$$

bedeutet,

**$R^1$** und **$R^2$** unabhängig voneinander Kohlenwasserstoffreste, Halogenatome oder Wasserstoffatome,
**$R^x$** unabhängig voneinander Wasserstoff, Halogen, unverzweigter, verzweigter, linearer, acyclischer oder cyclischer, gesättigter oder einfach oder mehrfach ungesättigter C1-C20-Kohlenwasserstoffrest oder unverzweigter, verzweigter, linearer oder cyclischer, gesättigter oder einfach oder mehrfach ungesättigter C1-C20-Kohlenwasserstoffoxyrest, wobei jeweils einzelne nicht benachbarte $CH_2$-Gruppen durch Sauerstoff- oder Schwefelatome, einzelne CH-Gruppen durch Stickstoffatome ersetzt sein können und jeweils die Kohlenstoffatome Halogensubstituenten tragen können, und
**a, b, c** und **d** unabhängig voneinander jeweils ganzzahlige Werte von 1 bis 10000 bedeuten,
wobei die Summe aus **a, b, c** und **d** zusammen mindestens den Wert 1 annimmt.

Besonders bevorzugt bedeuten die Reste **$R^1$** und **$R^2$** unabhängig voneinander Wasserstoff, Halogen, unverzweigter, verzweigter, acyclischer oder cyclischer, gesättigter oder einfach oder mehrfach ungesättigter C1-C20-Kohlenwasserstoffrest.
Ganz besonders bevorzugt bedeuten die Reste **$R^1$** und **$R^2$** unabhängig voneinander Wasserstoff, Chlor, linearer gesättigter C1-C10 Rest, cyclischer gesättigter oder einfach oder mehrfach ungesättigter C1-C10-Kohlenwasserstoffrest.
Insbesondere ganz besonders bevorzugt bedeuten die Reste **$R^1$** und **$R^2$** unabhängig voneinander Wasserstoff, Chlor, linearer oder verzweigter gesättigter C1-C3 Rest, cyclischer gesättigter oder einfach oder mehrfach ungesättigter C1-C6-Kohlenwasserstoffrest.
Bevorzugte Beispiele für die Reste **$R^1$** und **$R^2$** sind Wasserstoff, Chlor, Methyl, Ethyl, n-Propyl, i-Propyl, Butyl, Phenyl und Benzyl.
Vorzugsweise sind die Kohlenwasserstoffreste **$R^x$** Reste Methyl, Ethyl, n-Propyl, i-Propyl, Butyl, Phenyl oder Benzyl. Vorzugsweise sind die Kohlenwasserstoffreste **$R^x$** Reste Methoxy, Ethoxy, n-Propoxy oder i-Propoxy.
Bevorzugt bedeuten **a, b, c** und **d** unabhängig voneinander ganzzahlige Werte von 0 bis 1000, besonders bevorzugt von 0 bis 500 und ganz besonders bevorzugt von 0 bis 100.
Vorzugsweise beträgt die Summe aus **a, b, c** und **d** mindestens 1 bis 10, insbesondere 1 bis 5.
Es können auch Gemische aus verschiedenen Siloxanen der allgemeinen Formel I eingesetzt werden.
Das beim erfindungsgemäßen Verfahren gebildete Hydridosilan hat bevorzugt die allgemeine Formel II

$$\mathbf{R^1R^2H_2Si} \qquad \mathbf{(II)}$$

wobei die Reste **$R^1$** und **$R^2$** die oben angegebenen Bedeutungen und bevorzugten Bedeutungen haben.
Beispiele für die eingesetzten Siloxane der allgemeinen Formel I sind 1,1,2,2-Tetramethyldisiloxan, 1,1,1,2,2-Pentamethyldisiloxan, 1,1,2,2,3,3-Hexamethyltrisiloxan, 1,1,1,2,2,3,3-Heptamethyltrisiloxan, 1,1,2,2,3,3,4,4-Octamethyltetrasiloxan und höhere Homologe der allgemeinen Formel II:

$$H\text{-}SiMe_2\text{-}O\text{-}(SiMe_2\text{-}O)_n\text{-}SiMe_2\text{-}O\text{-}SiMe_2\text{-}H$$

oder

$$H\text{-}SiMe_2\text{-}O\text{-}(SiMe_2\text{-}O)_n\text{-}SiMe_2\text{-}O\text{-}SiMe_3$$

wobei n Werte von 0 bis 10000 annehmen kann.
Die Umsetzung erfolgt in Gegenwart einer oder mehrerer kationischer Si(II)-Verbindungen.
Bevorzugt wird eine kationische Si(II)-Verbindung der allgemeinen Formel III

$$\mathbf{([Si(II)Cp]^+)_aX^{a-}} \qquad \mathbf{(III)}$$

eingesetzt, worin
**Cp** einen $\pi$-gebundenen Cyclopentadienylrest der allgemeinen Formel **IV,** welcher mit den Resten **$R^y$** substituiert ist,

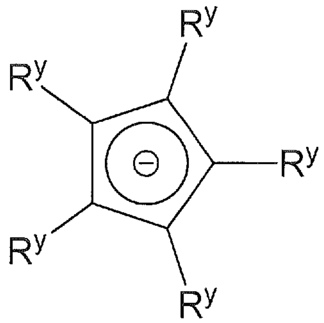

(IV)

bedeutet,

$R^y$ beliebige einwertige Reste oder mehrwertige Reste, die zur Bildung anellierter Ringe auch miteinander verbunden sein können,

**$X^{a-}$** ein beliebiges **a** wertiges Anion, welches unter den Reaktionsbedingungen mit dem kationischen Silicium(II)zentrum nicht reagiert und

**a** ganzzahlige Werte von 1 bis 6 bedeuten.

Unter Cyclopentadienylrest **Cp** ist das Cyclopentadienyl-Anion zu verstehen, welches aus einem einfach negativ geladenen, aromatischen Fünfringsystem $C_5R^y{}_5^-$ besteht.

Die Reste **$R^y$** bedeuten unabhängig voneinander bevorzugt Wasserstoff, lineare oder verzweigte, acyclische oder cyclische, gesättigte oder ein- oder mehrfach ungesättigte C1-C20 Alkyl oder Aryl, besonders bevorzugt C1-C3 Alkyl, ganz besonders bevorzugt Methylreste.

Beispiele für Reste $R^y$ sind Alkylreste, wie der Methyl-, Ethyl-, n-Propyl-, iso-Propyl-, n-Butyl-, sec-Butyl-, iso-Butyl-, tert.-Butyl-, n-Pentyl-, sec-Pentyl, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,4,4-Trimethylpentylrest; Nonylreste, wie der n-Nonylrest; Decylreste, wie der n-Decylrest; Dodecylreste, wie der n-Dodecylrest; Hexadecylreste, wie der n-Hexadecylrest; Octadecylreste, wie der n-Octadecylrest; Cycloalkylreste, wie der Cyclopentyl-, Cyclohexyl-, Cycloheptylrest und Methylcyclohexylrest; Arylreste, wie der Phenyl-, Naphthyl-, Anthryl- und Phenanthrylrest; Alkarylreste, wie der o-, m- und p-Tolyl-, Xylyl-, Mesitylenyl- und o-, m- und p-Ethylphenylrest; und Aralkylreste, wie der Benzylrest, der $\alpha$- und der $\beta$-Phenylethylrest.

**$X^{a-}$** kann sowohl anorganisch als auch organisch sein. Vorzugsweise hat **a** die Werte 1, 2, oder 3, insbesondere 1.

**$X^-$** bedeutet bevorzugt Halogen oder ein komplexes Anion wie $BF_4^-$, $ClO_4^-$, $AlZ_4^-$, $MF_6^-$ mit **Z** = Halogen und M = P, As oder Sb, oder Tetraarylboratanion, wobei der Arylrest bevorzugt Phenyl oder fluoriertes oder mit Perfluoralkylresten substituiertes Phenyl bedeutet, einwertiges polyedrisches Anion, wie z.B. Carboratanion, oder Alkoxy- und Aryloxymetallation.

Beispiele für Anionen **$X^-$** sind Tetrachlorometallate $[MCl_4]^-$ mit M = Al, Ga, Tetrafluoroborate $[BF_4]^-$, Hexafluorometallate $[MF_6]^-$ mit M = As, Sb, Ir, Pt, Perfluoroantimonate $[Sb_2F_{11}]^-$, $[Sb_3F_{16}]^-$ und $[Sb_4F_{21}]^-$, Triflat (= Trifluoromethanesulfonat) $[OSO_2CF_3]^-$, Tetrakis (trifluormethyl) borat $[B(CF_3)_4]^-$, Tetrakis(pentafluorophenyl)metallate $[M(C_6F_5)_4]^-$ mit M = B, Al, Ga, Tetrakis(pentachlorophenyl)borat $[B(C_6Cl_5)_4]^-$, Tetrakis [(2,4,6-trifluoromethyl(phenyl)]borat $\{B[C_6H_2(CF_3)_3]\}^-$, [Bis[tris(pentafluorophenyl)]hydroxid $\{HO[B(C_6F_5)_3]_2\}^-$, *Closo*-Carborate $[CHB_{11}H_5Cl_6]^-$, $[CHB_{11}H_5Br_6]^-$, $[CHB_{11}(CH_3)_5Br_6]^-$, $[CHB_{11}F_{11}]^-$, $[C(Et)B_{11}F_{11}]^-$, $[CB_{11}(CF_3)_{12}]^-$ und $B_{12}Cl_{11}N(CH_3)_3]^-$, Tetra(perfluoroalkoxy)aluminate $[Al(OR^{PF})_4]^-$, Tris(perfluoroalkoxy)fluoroaluminate $[FAl(OR^{PF})_3]^-$, Hexakis(oxypentafluorotellur)antimonat $[Sb(OTeF_5)_6]^-$.

Eine Übersicht über besonders bevorzugte komplexe Anionen $X^-$ findet sich z.B. in Krossing et. al., Angew. Chem. 2004, 116, 2116.

Die Herstellung der kationischen Si(II)-Verbindung der allgemeinen Formel III kann durch Zugabe einer Säure $H^+X^-$ zu der Verbindung $Si(II)Cp_2$, durch die einer der anionischen Cp-Reste in protonierter Form abgespalten wird, erfolgen:

$$Si(II)Cp_2 + H^+X^- \text{->} Si(II)^+Cp\ X^- + CpH$$

Das Anion **$X^-$** der Säure HX bildet dann das Gegenion der kationischen Silicium(II)-Verbindung.

Eine Herstellungsmethode für die kationische Si(II) Verbindung der allgemeinen Formel **III** ist in Science 2004, 305, S. 849-851, beschrieben:

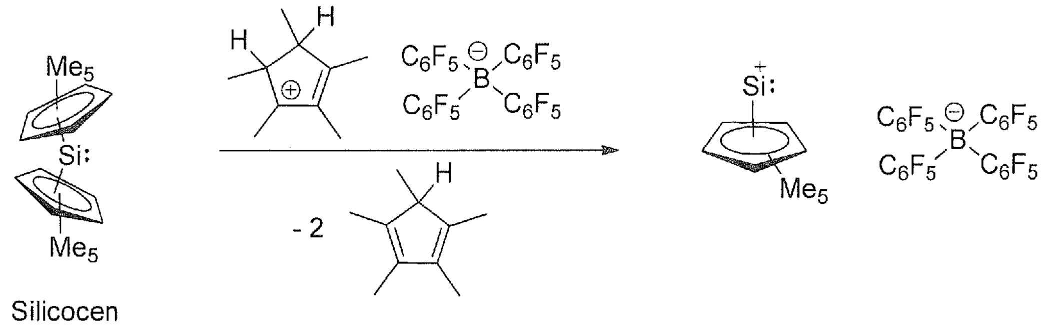


Silicocen
Cp2*Si

Die Bildung der kationischen Si(II)-Verbindung der allgemeinen Formel **III** erfolgt dort mit Hilfe der Säure $(Cp^*H_2)^+$ $B(C_6F_5)_4^-$ (Cp* = Pentamethylcyclopentadienyl). In diesem Fall wird die Verbindung der Formel **III** mit dem Gegenion $X^-$ = $B(C_6F_5)_4^-$ erhalten, welches sehr gut kristallisierbar ist und daher besonders leicht isoliert werden kann. Die Verbindung der allgemeinen Formel **III** kann jedoch auch durch Zugabe anderer Bronstedt-Säuren erzeugt werden, wobei Säuren bevorzugt sind, deren Anionen den oben angegebenen Anforderungen der schwachen Koordination entsprechen.

Weitere Beispiele für kationische Silicium-II-Verbindungen sind die folgenden Strukturen:

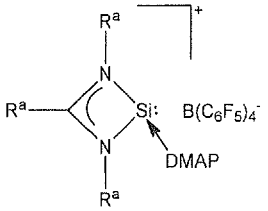
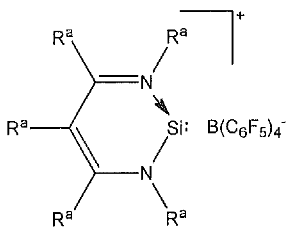
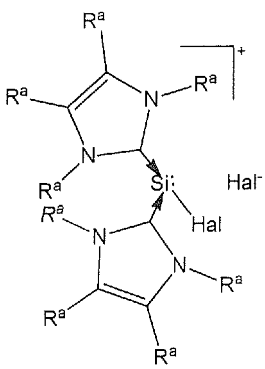
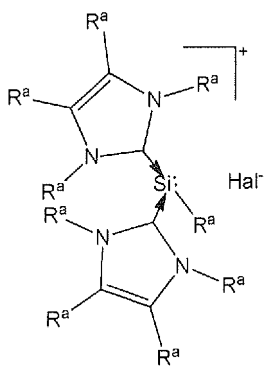

deren Herstellung in So et al, Chem. Eur. J. 2013, 19, 11786, Driess et al., Angew. Chem. Int. Ed. 2006, 45, 6730, Filippou, Angew. Chem. Int. Ed. 2013, 52, 6974, Sasamori et al, Chem. Eur. J. 2014, 20, 9246 und in Inoue et al., Chem. Commun. 2014, 50, 12619 beschrieben ist (DMAP = Dimethylaminopyridin).

In den vorstehenden Formeln bedeuten $\mathbf{R^a}$ Kohlenwasserstoffreste. Bevorzugt bedeuten die Reste $\mathbf{R^a}$ unabhängig voneinander Alkylrest, insbesondere C1-C20- Alkylrest oder substituierten oder unsubstituierten Phenylrest, besonders bevorzugt verzweigten Alkylrest oder 2,6-dialkylierten Phenylrest. Hal bedeutet Halogen, bevorzugt Chlor, Brom oder Jod. Beispiele für Reste $\mathbf{R^a}$ sind Methyl, Isopropyl, *tert.*-Butyl, 2,6-Diisopropylphenyl oder 2,4,6-Triisopropylphenyl.

Der Gewichtsanteil der kationischen Si(II)-Verbindung beträgt bezogen auf die gesamte Masse an Si-H-Gruppierungen enthaltenden Siloxanen bevorzugt mindestens $10^{-5}$ Gew. % (0,1 ppm) und höch-stens 20 Gew. %, besonders bevorzugt mindestens $10^{-4}$ Gew. % (1 ppm) und höchstens 5 Gew.% und insbesondere besonders bevorzugt mindestens $10^{-3}$ Gew. % (10 ppm) und höchstens 1 Gew. %.

Die erfindungsgemäße Umsetzung kann mit oder ohne Zusatz einer oder mehrerer Lösemittel durchgeführt werden. Der Anteil des Lösemittels oder des Lösemittelgemisches beträgt bezogen auf die Si-H-Gruppierungen enthaltenden Siloxane bevorzugt mindestens 0,1 Gew. % und höchstens die 1000-fache Gewichtsmenge, besonders bevorzugt mindestens 10 Gew. % und höchstens die 100-fache Gewichtsmenge, ganz besonders bevorzugt mindestens 30 Gew. % und höchstens die 10-fache Gewichtsmenge.

Als Lösemittel können bevorzugt aprotische Lösemittel, beispielsweise Kohlenwasserstoffe wie Pentan, Hexan, Heptan, Cyclohexan oder Toluol, Chlorkohlenwasserstoffe wie Dichlormethan, Chloroform, Chlorbenzol oder 1,2-Dichlorethan, Ether wie Diethylether, Methyl-*tert.*-butylether, Anisol, Tetrahydrofuran oder Dioxan, oder Nitrile wie z.B. Acetonitril oder Propionitril, eingesetzt werden.

Die Umsetzung kann unter Umgebungsdruck oder unter vermindertem oder unter erhöhtem Druck durchgeführt werden.

Der Druck beträgt bevorzugt mindestens 0,01 bar und höchstens 100 bar, besonders bevorzugt mindestens 0,1 bar und höchstens 10 bar, ganz besonders bevorzugt wird die Umsetzung bei Umgebungsdruck durchgeführt.
Die erfindungsgemäße Umsetzung erfolgt bevorzugt bei Temperaturen zwischen mindestens - 100°C und höchstens + 250°C, besonders bevorzugt zwischen mindestens - 20°C und höchstens 150°C, ganz besonders bevorzugt zwischen mindestens 0°C und höchstens 100°C.
Die im Vergleich zu den bei der Umsetzung ebenfalls gebildeten höheren Siloxanen erheblich flüchtigeren Silane der allgemeinen Formel II können von den Siloxanen auf besonders einfache Weise destillativ entfernt werden. Auf diese Art kann die Abtrennung bereits während der Umsetzung erfolgen.
Alle vorstehenden Symbole der vorstehenden Formeln weisen ihre Bedeutungen jeweils unabhängig voneinander auf. In allen Formeln ist das Siliciumatom vierwertig.

**Beispiele**

Es sind, falls jeweils nicht anders angegeben, alle Mengen- und Prozentangaben auf das Gewicht bezogen, und alle Temperaturen 20°C.
Gaschromatogramme wurden mit einem Gaschromatographen Modell A6890 plus der Fa. Agilent aufgenommen. Verwendete Säule: HP-5, Nr. US2441516H, 30 m, 0,32 mm, 0,25 μm, Temperatur: 40°C - 120°C mit 5°C/min.; von 120°C bis 300°C mit 10°C/min.; Injector: 290°C, Split 1 : 250, 1,0 μl, Trägergas He 1,5 ml/min.; Detektor: FID, 320°C. Die Identifikation der Produkte erfolgte durch Vergleich mit authentischem Material.
In den nachfolgenden Beispielen wurde der Umsatz jeweils $^1$H-NMR-spektroskopisch bestimmt. Hierfür wurde das Integral der Wasserstoffe der gebildeten Silane (Dimethylsilan bei $\delta$ = 3,8 und Trimethylsilan bei $\delta$=4,0) und das Gesamtintegral aller Wasserstoffe an Siloxangruppierungen bei $\delta$ = 4,7 - 4,8 bestimmt und der Umsatz nach der folgenden Gleichung berechnet.

$$\text{Umsatz (\%)} = 100 \times I(\text{Silane})/[I(\text{Siloxane}) + I(\text{Silane})]$$

Beispiel 1: Disproportionierung von 1,1,1,2,2-Pentamethyldisiloxan in Gegenwart von $\pi$-$Me_5C_5)Si^+B(C_6F_5)_4^-$

Alle Arbeitsschritte wurden unter Ar ausgeführt.
296 mg (2,00 mmol) Pentamethyldisiloxan wurden in 1,0 ml $d_2$-Dichlormethan gelöst und bei 20°C mit einer Lösung von 1,8 mg (0,0021 mmol, 0,11 mol %) ($\pi$-$Me_5C_5)Si^+B(C_6F_5)_4^-$ versetzt. Die Umsetzung wurde NMR-spektroskopisch verfolgt. Nach 45 Minuten war das Edukt Pentamethyldisiloxan NMR spektroskopisch nicht mehr nachweisbar, das NMR zeigt die Bildung höhermolekularer H-Gruppen enthaltender Siloxane an. Es bildeten sich die Silane Dimethylsilan und Trimethylsilan im molaren Verhältnis 70 : 30 Umsatz = 95 %.

Beispiel 2: Disproportionierung von 1,1,2,2-Tetramethyldisiloxan in Gegenwart von ($\pi$-$Me_5C_5)Si^+B(C_6F_5)_4^-$

Alle Arbeitsschritte wurden unter Ar ausgeführt.
269 mg (2,00 mmol) Tetramethyldisiloxan wurden in 1,5 ml $d_2$-Dichlormethan gelöst und bei Raumtemperatur (ca. 23°C) unter Schütteln mit 1,9 mg (0,00226 mmol, 0,11 mol %) ($\pi$-$Me_5C_5)Si^+$ $B(C_6F_5)_4^-$ versetzt. Die Umsetzung wurde nach 30 min. mit Pyridin gestoppt und das Reaktionsgemisch NMR-spektroskopisch untersucht. Es bildete sich als Silan ausschließlich Dimethylsilan.

$$\text{Umsatz} = 70\ \%$$

Die weiteren Produkte wurden gaschromatographisch bestimmt.
Es wurden die folgenden Produkte durch Vergleich mit authentischem Material nachgewiesen (Retentionszeiten und Flächen-% in Klammern) - das Dimethylsilan wurde hierbei nicht erfasst: 1,1,2,2-Tetramethydisiloxan (2,14 min., 15 %), Pyridin (3,24 min., 41 %), 1,1,2,2,3,3-Hexamethyltrisiloxan (3,95 min., 8,6 %), 1,1,2,2,3,3,4,4-Octamethyltetrasiloxan (7,99 min., 1,5 %), 1,1,2,2,3,3,4,4,5,5-Decamethylpentasiloxan (12,85 min., 8,6 %), 1,1,2,2,3,3,4,4,5,5,6,6-Dodecamethylhexasiloxan (17,23 min., 7,0 %), 1,1,2,2,3,3,4,4,5,5,6,6,7,7-Tetradecamethylheptasiloxan (20,08 min., 5,1 %), 1,1,2,2,3,3,4,4,5,5,6,6,7,7,8,8-Hexadecamethyloctasiloxan (22,16 min., 3,3 %).
Siloxancyclen wurden gaschromatographisch nicht nachgewiesen.

Beispiel 3: Disproportionierung von 1,1,2,2-Tetramethyldisiloxan in Gegenwart von ($\pi$-$Me_5C_5$)$Si^+HB(C_6F_5)_3^-$

Alle Arbeitsschritte wurden unter Ar ausgeführt.
269 mg (2,00 mmol) Tetramethyldisiloxan wurden in 1,5 ml $d_2$-Dichlormethan gelöst und bei Raumtemperatur (ca. 23°C) unter Schütteln mit 1,4 mg (0,00207 mmol, 0,10 mol %) ($\pi$-$Me_5C_5$)$Si^+$ $HB(C_6F_5)_3^-$ versetzt. Die Umsetzung wurde nach 30 min. mit Pyridin gestoppt und das Reaktionsgemisch NMR-spektroskopisch untersucht. Es bildete sich als Silan ausschließlich Dimethylsilan.

Umsatz = 45 %

Siloxancyclen wurden gaschromatographisch nicht nachgewiesen.

Beispiel 4 (nicht erfindungsgemäß, Bildung von Siloxancyclen):

Disproportionierung von 1,1,2,2-Tetramethyldisiloxan in Gegenwart von $B(C_6F_5)_3$
268 mg (2,00 mmol) Tetramethyldisiloxan wurden in 1,5 ml $d_2$-Dichlormethan gelöst und bei Raumtemperatur (ca. 23°C) unter Schütteln mit 1,1 mg (0,00215 mmol, 0,11 mol %) $B(C_6F_5)_3$ versetzt. Die Umsetzung wurde nach 30 min. mit Pyridin gestoppt und das Reaktionsgemisch NMR-spektroskopisch untersucht. Es bildete sich als Silan ausschließlich Dimethylsilan.

Umsatz = 65 %

Die weiteren Produkte wurden gaschromatographisch bestimmt

- das Dimethylsilan wurde hierbei nicht erfasst. Es wurden die folgenden Produkte durch Vergleich mit authenti-schem Material nachgewiesen (Retentionszeiten und Flächen-% in Klammern): Pyridin (3,20 min., 22 %), 1,1,2,2,3,3-Hexamethyl-trisiloxan (3,92 min., 11,8 %), Hexamethylcyclotrisiloxan (4,27 min., 0,8%), 1,1,2,2,3,3,4,4-Octamethyltetrasiloxan (7,97 min., 0,6 %), Octamethylcyclopentasiloxan (8,26 min., 10,0%), Decamethylcyclopentasiloxan (12,49 min., 0,9 %),
  1,1,2,2,3,3,4,4,5,5-Decamethylpentasiloxan (12,80 min., 1,0 %), 1,1,2,2,3,3,4,4,5,5,6,6-Dodecamethylhexasiloxan (17,21 min., 7,0 %), Tetradecamethylcycloheptasiloxan (20,03 min., 7,3 %).

Beispiel 5 (nicht erfindungsgemäß, Nachweis Zersetzungsprodukt des Lewis-sauren Bor-Katalysators)

Alle Arbeitsschritte wurden unter Ar ausgeführt. 268 mg (2,00 mmol) Tetramethyldisiloxan werden in 1,5 ml $d_2$-Dichlormethan gelöst und 1,1 mg (0,00215 mmol, 0,1 mol %) Tris(pentafluorophenyl)bor versetzt. Es bildete sich Dimethylsilan. Im $^{19}$F-NMR Spektrum wurde die Bildung von mehreren fluorhaltigen Nebenprodukten festgestellt. Durch GC/MS-Analyse nach einer Stunde Reaktionszeit wurde die Bildung von Dimethyl(pentafluorphenyl)-silan ($M^+$ = 225) nachgewiesen. Der relative Flächenanteil im GC betrug 0,2 %.

## Patentansprüche

1. Verfahren zur Herstellung von Hydridosilanen, bei dem Si-H-Gruppierungen enthaltende Siloxane in Gegenwart einer kationischen Si(II)-Verbindung als Katalysator umgesetzt werden.

2. Verfahren nach Anspruch 1, bei dem das eingesetzte Si-H-Gruppierungen enthaltende Siloxan die allgemeine Formel I

$$\mathbf{R^1R^2HSiO_{(1/2)}Z} \qquad \mathbf{(I)},$$

aufweist, wobei

**Z** die allgemeine Formel Ia

$$\mathbf{(SiO_{4/2})_a(R^xSiO_{3/2})_b(R^x{}_2SiO_{2/2})_c(R^x{}_3SiO_{1/2})_d} \qquad \mathbf{(Ia)}$$

bedeutet,
**$R^1$** und **$R^2$** unabhängig voneinander Kohlenwasserstoffreste, Halogenatome oder Wasserstoffatome,
**$R^x$** unabhängig voneinander Wasserstoff, Halogen, unverzweigter, verzweigter, linearer, acyclischer oder cyclischer, gesättigter oder einfach oder mehrfach ungesättigter C1-C20-Kohlenwasserstoffrest oder unverzweigter, verzweigter, linearer oder cyclischer, gesättigter oder einfach oder mehrfach ungesättigter C1-C20-Kohlenwasserstoffoxyrest, wobei jeweils einzelne nicht benachbarte $CH_2$-Gruppen durch Sauerstoff- oder Schwefelatome, einzelne CH-Gruppen durch Stickstoffatome ersetzt sein können und jeweils die Kohlenstoffatome Halogensubstituenten tragen können, und **a, b, c** und **d** unabhängig voneinander jeweils ganzzahlige Werte von 1 bis 10000 bedeuten,

wobei die Summe aus **a, b, c** und **d** zusammen mindestens den Wert 1 annimmt.

3. Verfahren nach Anspruch 2, bei dem die Reste **$R^1$** und **$R^2$** unabhängig voneinander Wasserstoff, Chlor, linearer gesättigter C1-C10 Rest, cyclischer gesättigter oder einfach oder mehrfach unge-sättigter C1-C10-Kohlenwasserstoffrest bedeuten.

4. Verfahren nach Anspruch 2 oder 3, bei dem die Reste **$R^x$** ausgewählt werden aus Methyl, Ethyl, n-Propyl, i-Propyl, Butyl, Phenyl, Benzyl, Methoxy, Ethoxy, n-Propoxy oder i-Propoxy.

5. Verfahren nach Anspruch 2 bis 4, bei dem die Summe aus **a, b, c** und **d** 1 bis 10 beträgt.

6. Verfahren nach Anspruch 2 bis 5, bei dem eine kationische Si(II)-Verbindung der allgemeinen Formel III

$$([Si(II)Cp]^+)_aX^{a-} \qquad (III)$$

eingesetzt wird, worin

**Cp** einen π-gebundenen Cyclopentadienylrest der allgemeinen Formel **IV,** welcher mit den Resten **$R^y$** substituiert ist,

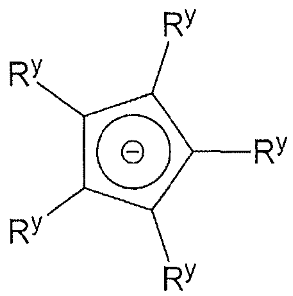

(IV)

bedeutet,
**$R^y$** einwertige Reste oder mehrwertige Reste, die zur Bildung anellierter Ringe auch miteinander verbunden sein können,
**$X^{a-}$** ein **a** wertiges Anion, welches unter den Reaktionsbedingungen mit dem kationischen Silicium(II)zentrum nicht reagiert und
**a** ganzzahlige Werte von 1 bis 6 bedeuten.

7. Verfahren nach Anspruch 2 bis 6, bei dem **$R^y$** unabhängig voneinander Wasserstoff, lineare oder verzweigte, acyclische oder cyclische, gesättigte oder ein- oder mehrfach ungesättigte C1-C20 Alkyl oder Aryl bedeutet.

8. Verfahren nach Anspruch 2 bis 7, bei dem a den Wert 1 bedeutet.

9. Verfahren nach Anspruch 2 bis 8, bei dem **$X^-$** ausgewählt wird aus Halogen, $BF_4^-$, $ClO_4^-$, $AlZ_4^-$, $MF_6^-$ mit **Z** = Halogen und M = P, As oder Sb, Tetraarylboratanion, wobei der Arylrest Phenyl oder fluoriertes oder mit Perfluoralkylresten substituiertes Phenyl bedeutet, Carboratanion, Alkoxy- und Aryloxymetallation.

**10.** Verfahren nach Anspruch 2 bis 8, bei dem der Gewichtsanteil der kationischen Si(II)-Verbindung bezogen auf die gesamte Masse an Si-H-Gruppierungen enthaltenden Siloxanen $10^{-5}$ Gew. % (0,1 ppm) bis 5 Gew. %, beträgt.

## Claims

**1.** Method for preparing hydridosilanes, in which siloxanes comprising Si-H groups are reacted in the presence of a cationic Si(II) compound as catalyst.

**2.** Method according to Claim 1, in which the siloxane comprising Si-H groups used has the general formula I

$$\mathbf{R^1R^2HSiO_{(1/2)}Z} \qquad \mathbf{(I),}$$

wherein

**Z** signifies the general formula Ia

$$\mathbf{(SiO_{4/2})_a(R^xSiO_{3/2})_b(R^x{}_2SiO_{2/2})_c(R^x{}_3SiO_{1/2})_d} \qquad \mathbf{(Ia)}$$

$\mathbf{R^1}$ and $\mathbf{R^2}$ are each independently hydrocarbon radicals, halogen atoms or hydrogen atoms,
$\mathbf{R^x}$ are each independently hydrogen, halogen, an unbranched, branched, linear, acyclic or cyclic, saturated or mono- or polyunsaturated C1-C20 hydrocarbon radical or an unbranched, branched, linear or cyclic, saturated or mono- or polyunsaturated C1-C20 hydrocarbonoxy radical, wherein in each case individual non-adjacent $CH_2$ groups can be replaced by oxygen or sulfur atoms and individual CH groups can be replaced by nitrogen atoms and in each case the carbon atoms may bear halogen substituents, and
**a, b, c** and **d** are each independently in each case integer values from 1 to 10 000,
wherein the sum total of **a, b, c** and **d** together has at least the value 1.

**3.** Method according to Claim 2, in which the radicals $\mathbf{R^1}$ and $\mathbf{R^2}$ are each independently hydrogen, chlorine, linear saturated C1-C10 radicals, cyclic saturated or mono- or polyunsaturated C1-C10 hydrocarbon radicals.

**4.** Method according to Claim 2 or 3, in which the radicals $\mathbf{R^x}$ are selected from methyl, ethyl, n-propyl, isopropyl, butyl, phenyl, benzyl, methoxy, ethoxy, n-propoxy or isopropoxy.

**5.** Method according to Claims 2 to 4, in which the sum total of **a, b, c** and **d** is 1 to 10.

**6.** Method according to Claims 2 to 5, in which a cationic Si(II) compound of the general formula III

$$\mathbf{([Si(II)Cp]^+)_aX^{a-}} \qquad \mathbf{(III)}$$

is used, wherein

**Cp** is a π-bonded cyclopentadienyl radical of the general formula **IV,** which is substituted by the radicals $\mathbf{R^y}$,

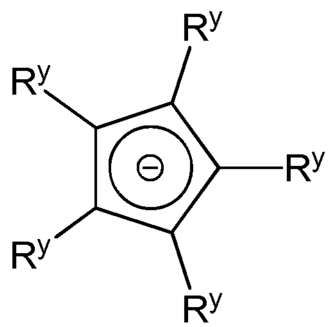

(IV)

$\mathbf{R^y}$ are monovalent radicals or polyvalent radicals, which can also be bonded to one another to form fused rings,
$\mathbf{X^{a-}}$ is an **a** valent anion, which does not react with the cationic silicon (II) center under the reaction conditions and

**a** has integer values from 1 to 6.

**7.** Method according to Claims 2 to 6, in which $\mathbf{R^y}$ is each independently hydrogen, linear or branched, acyclic or cyclic, saturated or mono- or polyunsaturated C1-C20 alkyl or aryl.

**8.** Method according to Claims 2 to 7, in which **a** has the value 1.

**9.** Method according to Claims 2 to 8, in which $\mathbf{X^-}$ is selected from halogen, $BF_4^-$, $ClO_4^-$, $AlZ_4^-$, $MF_6^-$ where **Z** = halogen and M = P, As or Sb, tetraaryl borate anion, wherein the aryl radical is phenyl or fluorinated phenyl or phenyl substituted by perfluoroalkyl radicals, carborate anion, alkoxymetallate ion and aryloxymetallate ion.

**10.** Method according to Claims 2 to 8, in which the proportion by weight of the cationic Si(II) compound, based on the total mass of siloxanes comprising Si-H groups, is $10^{-5}$% by weight (0.1 ppm) to 5% by weight.

## Revendications

**1.** Procédé de fabrication d'hydridosilanes, selon lequel des siloxanes contenant des groupes Si-H sont mis en réaction en présence d'un composé de Si(II) cationique en tant que catalyseur.

**2.** Procédé selon la revendication 1, selon lequel le siloxane contenant des groupes Si-H utilisé présente la formule I :

$$\mathbf{R^1R^2HSiO_{(1/2)}Z} \qquad \mathbf{(I)}$$

dans laquelle

**Z** signifie la formule générale la :

$$\mathbf{(SiO_{4/2})_a(R^XSiO_{3/2})_b(R^X{}_2SiO_{2/2})_c(R^X{}_3SiO_{1/2})_d} \qquad \mathbf{(Ia)}$$

$\mathbf{R^1}$ et $\mathbf{R^2}$ signifient indépendamment l'un de l'autre des radicaux hydrocarbonés, des atomes d'halogène ou des atomes d'hydrogène,
les $\mathbf{R^X}$ signifient indépendamment les uns des autres l'hydrogène, un halogène, un radical hydrocarboné en C1-C20 non ramifié, ramifié, linéaire, acyclique ou cyclique, saturé ou mono- ou polyinsaturé, ou un radical oxyhydrocarboné en C1-C20 non ramifié, ramifié, linéaire ou cyclique, saturé ou mono- ou polyinsaturé, des groupes $CH_2$ non voisins individuels pouvant être remplacés par des atomes d'oxygène ou de soufre, des groupes CH individuels pouvant être remplacés par des atomes d'azote, et les atomes de carbone pouvant chacun porter des substituants halogène, et
**a, b, c** et **d** signifient chacun indépendamment les uns des autres des valeurs de nombre entier de 1 à 10 000, la somme de **a, b, c** et **d** ensemble prenant au moins la valeur 1.

**3.** Procédé selon la revendication 2, selon lequel les radicaux $\mathbf{R^1}$ et $\mathbf{R^2}$ signifient indépendamment l'un de l'autre l'hydrogène, le chlore, un radical en C1-C10 linéaire saturé, un radical hydrocarboné en C1-C10 cyclique saturé ou mono- ou polyinsaturé.

**4.** Procédé selon la revendication 2 ou 3, selon lequel les radicaux $\mathbf{R^X}$ sont choisis parmi méthyle, éthyle, n-propyle, i-propyle, butyle, phényle, benzyle, méthoxy, éthoxy, n-propoxy ou i-propoxy.

**5.** Procédé selon les revendications 2 à 4, selon lequel la somme de **a, b, c** et **d** est de 1 à 10.

**6.** Procédé selon les revendications 2 à 5, selon lequel un composé de Si(II) cationique de la formule générale III :

$$\mathbf{([Si(II)Cp]^+)_aX^{a-}} \qquad \mathbf{(III)}$$

est utilisé, dans laquelle

**Cp** signifie un radical cyclopentadiényle à liaison $\pi$ de la formule générale **IV,** qui est substitué avec les radicaux $\mathbf{R^y}$ :

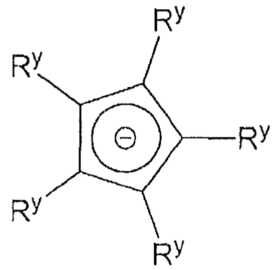

(IV)

les $\mathbf{R}^y$ signifient des radicaux monovalents ou des radicaux polyvalents, qui peuvent également être reliés les uns avec les autres pour former des cycles annelés,

$\mathbf{X}^{a-}$ signifie un anion **a**-valent, qui ne réagit pas avec le centre silicium (II) cationique dans les conditions de réaction, et

**a** signifie des valeurs de nombre entier de 1 à 6.

**7.** Procédé selon les revendications 2 à 6, selon lequel les $\mathbf{R}^y$ signifient indépendamment les uns des autres l'hydrogène, un alkyle ou aryle en C1-C20 linéaire ou ramifié, acyclique ou cyclique, saturé ou mono- ou polyinsaturé.

**8.** Procédé selon les revendications 2 à 7, selon lequel **a** signifie la valeur 1.

**9.** Procédé selon les revendications 2 à 8, selon lequel $\mathbf{X}^-$ est choisi parmi halogène, $BF_4^-$, $ClO_4^-$, $AlZ_4^-$, $MF_6^-$, avec **Z** = halogène et **M** = P, As ou Sb, un anion tétraarylborate, le radical aryle signifiant phényle ou phényle fluoré ou substitué avec des radicaux perfluoroalkyle, un anion carborate, un ion alcoxy- et aryloxymétallate.

**10.** Procédé selon les revendications 2 à 8, selon lequel la proportion en poids du composé de Si(II) cationique par rapport à la masse totale de siloxanes contenant des groupes Si-H est de $10^{-5}$ % en poids (0,1 ppm) à 5 % en poids.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2007005037 A
- US 2441516H A


### In der Beschreibung aufgeführte Nicht-Patentliteratur


- *Macromolecules,* 2006, vol. 39, 3802
- **KROSSING.** *Angew. Chem.,* 2004, vol. 116, 2116
- *Science,* 2004, vol. 305, 849-851
- **SO et al.** *Chem. Eur. J.,* 2013, vol. 19, 11786
- **DRIESS et al.** *Angew. Chem. Int. Ed.,* 2006, vol. 45, 6730
- **FILIPPOU.** *Angew. Chem. Int. Ed.,* 2013, vol. 52, 6974
- **SASAMORI et al.** *Chem. Eur. J.,* 2014, vol. 20, 9246
- **INOUE et al.** *Chem. Commun.,* 2014, vol. 50, 12619